(19) Europäisches Patentamt / European Patent Office / Office européen des brevets

(11) **EP 3 266 817 B1**

(12) **EUROPEAN PATENT SPECIFICATION**

(45) Date of publication and mention
of the grant of the patent:
**05.04.2023 Bulletin 2023/14**

(21) Application number: **16758614.8**

(22) Date of filing: **22.02.2016**

(51) International Patent Classification (IPC):
*B60C 1/00* (2006.01)    *C08J 3/20* (2006.01)
*C08K 3/06* (2006.01)    *C08K 3/36* (2006.01)
*C08K 5/00* (2006.01)    *C08K 5/101* (2006.01)
*C08K 5/103* (2006.01)    *C08K 5/36* (2006.01)
*C08K 5/405* (2006.01)    *C08K 5/47* (2006.01)
*C08K 5/54* (2006.01)    *C08L 7/00* (2006.01)
*C08L 9/00* (2006.01)

(52) Cooperative Patent Classification (CPC):
(C-Sets available)
C08K 3/36; B29B 7/007; B29B 7/726;
B29B 7/7495; B60C 1/00; C08J 3/20; C08K 3/06;
C08K 5/0025; C08K 5/101; C08K 5/103;
C08K 5/36; C08K 5/405; C08K 5/47; C08K 5/54;
C08L 7/00;           (Cont.)

(86) International application number:
**PCT/JP2016/000934**

(87) International publication number:
**WO 2016/139915 (09.09.2016 Gazette 2016/36)**

(54) **RUBBER COMPOSITION FOR TIRES, AND TIRE**

KAUTSCHUKZUSAMMENSETZUNG FÜR REIFEN SOWIE REIFEN

COMPOSITION DE CAOUTCHOUC POUR PNEUS, ET PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2015 JP 2015044066**

(43) Date of publication of application:
**10.01.2018 Bulletin 2018/02**

(73) Proprietor: **Bridgestone Corporation
Tokyo 104-8340 (JP)**

(72) Inventor: **YONEMOTO, Makiko
Tokyo 104-8340 (JP)**

(74) Representative: **Marks & Clerk LLP
15 Fetter Lane
London EC4A 1BW (GB)**

(56) References cited:
EP-A1- 2 937 384     EP-A1- 3 138 874
EP-A1- 3 159 376     WO-A1-2004/013221
WO-A1-2014/098155     WO-A1-2015/147274
JP-A- S6 262 836     JP-A- 2005 534 759
JP-A- 2009 504 810

(52) Cooperative Patent Classification (CPC): (Cont.)
**C08L 9/00;** B29B 7/38

C-Sets
**C08K 3/06, C08L 9/00;**
**C08K 3/36, C08L 9/00;**
**C08K 5/0025, C08L 9/00;**
**C08K 5/101, C08L 9/00;**
**C08K 5/405, C08L 9/00;**
**C08K 5/47, C08L 9/00;**
**C08K 5/54, C08L 9/00**

**Description**

TECHNICAL FIELD

This disclosure relates to a rubber composition for tire and a tire.

BACKGROUND

Recently, relating to the currency of global carbon dioxide emission limits accompanying increased concerns with environment problem, requirement for fuel consumption reduction of automobiles is increasing. In order to satisfy such requirement, with respect to tire performances, reduction of rolling resistance is desired as well. As a method for reducing the rolling resistance of tires, conventionally known is to use a rubber composition with small hysteresis loss (i.e., excellent in low loss property), and it is possible to achieve such rubber composition with small hysteresis loss by improving dispersibility of the filler, in particular, silica.

Here, conventionally known as a method for improving the dispersibility of silica is exemplified as using a modified polymer as a matrix rubber component. The modified polymer has a high affinity with silica, and thus is capable of dispersing silica at a high degree in the rubber composition.

Moreover, as a method other than using a modified polymer, the Applicant has succeeded in improving the dispersibility of silica by using nucleophilic agents such as thioureas, or bases such as diphenylguanidine (DPG). However, if these nucleophilic agents or bases are compounded to the rubber composition, there was a problem of increase of pre-vulcanization viscosity of the rubber composition.

On the other hand, a glycerin fatty acid ester, as described in WO 2014/098155 A1 (PTL 1) has been developed as a chemical for reducing the pre-vulcanization viscosity of the rubber composition, and simultaneously improving the dispersibility of silica.

CITATION LIST

Patent Literature

[PTL 1] WO 2014/098155 A1

SUMMARY

(Technical Problem)

However, according to our study, it was understood that even using the chemical as disclosed in PTL1, there is still room for improving the dispersibility of silica. Moreover, in order to not only further improve the processability of rubber composition, but also to reduce rolling resistance of tire, and to improve breaking resistance and wear resistance, improvement of the low loss property (low tan $\delta$), the breaking resistance and the wear resistance is desired in rubber compositions used in tires. According to our further study, it was understood that there is still room for improving the low loss property, the breaking resistance and the wear resistance in the technique as described in PTL1.

Then, this disclosure aims to solve the problem of the prior art, and aims to provide a rubber composition for tire excellent in processability, low loss property, breaking resistance and wear resistance.

Moreover, this disclosure aims to further provide a tire with small rolling resistance, and excellent breaking resistance and wear resistance.

(Solution to Problem)

The summary and construction of the rubber composition for tire and the tire of this disclosure for solving the aforementioned problem is as follows.

The rubber composition for tire of this disclosure is a rubber composition for tire obtainable by a method for producing a rubber composition comprising: (a) preparing a preliminary composition by preparing a first mixture containing all of or a part of a diene based rubber (A), a silica (B), a silane coupling agent (C) and at least one activator (D) selected from guanidines, cysteines, thioureas, ammonium thiocyanates, zinc dialkyl dithiophosphates or thiadiazoles, and containing a glycerin fatty acid ester (E), and kneading the first mixture; and (b) preparing the rubber composition by adding a vulcanizing agent (F) into the preliminary composition to prepare a second mixture, and kneading the second mixture, wherein: the glycerin fatty acid ester (E) is an ester of a glycerin and two or more fatty acids, a fatty acid component which is the most among the two or more fatty acids constituting the glycerin fatty acid ester being 10 to 90 mass% of all the fatty acids; among the two or more fatty acids constituting the glycerin fatty acid ester (E), one among the most fatty acid component and a second most fatty acid component is a fatty acid with 16 carbon atoms, and the other is a fatty acid with 18 carbon atoms; and a compounding amount of the glycerin fatty acid ester (E) is 0.5 to 20 parts by mass per 100 parts by mass of the silica (B) . The rubber composition for tire of this disclosure is excellent in processability, low loss property, breaking resistance and wear resistance.

Here, regarding the fatty acid components, fatty acids with identical number of alkyl carbon atoms and their configuration and bonding state, i.e., stereoisomers, are considered as one component. For example, even fatty acids with the same number of carbon atoms of 18, n-1-octadecanoic acid (ordinary straight chain stearic acid), 2-octyl-1-decanoic acid (stearic acid having a branch at the 2-position), cis-9-octadecenoic acid (ordinary oleic acid), and cis,cis-9,12-octadecadienoic acid (ordinary linoleic acid) are considered as different components.

Moreover, although the mass ratio of the two or more fatty acids is that the most fatty acid component is 10 to 90 mass% in all the fatty acids, from the viewpoint of further improving the processability, the low loss property, the breaking resistance and the wear resistance of the rubber composition, 15 to 80 mass% is preferable, 20 to 70 mass% is more preferable, and 30 to 60 mass% is further more preferable.

In a favorable example for the rubber composition for tire of this disclosure, the glycerin fatty acid ester (E) contains 50 to 100 mass% of a glycerin fatty acid monoester. Here, the glycerin fatty acid ester (E) more preferably contains 60 to 99 mass%, further more preferably 85 to 98 mass% of a glycerin fatty acid monoester. A glycerin fatty acid ester containing 50 to 100 mass% of a glycerin fatty acid monoester is easy to obtain, and is capable of sufficiently improving the processability, the low loss property, the breaking resistance and the wear resistance of the rubber composition.

The glycerin fatty acid ester may be obtained with any one among the methods of: performing esterification reaction with a glycerin and fatty acids; hydrolyzing a glycerin fatty acid triester such as natural fat and oil; or performing transesterification with a glycerin fatty acid triester such as natural fat and oil, and fatty acids. The method for obtaining the glycerin fatty acid ester is not specifically limited, and well known methods may be used. From the viewpoint of the productivity, it is preferable to use the method of performing esterification reaction with a glycerin and fatty acids.

The material of the fatty acids may be those obtained by hydrolyzing fats and oils, such as plant fats and oils, and animal fats and oils, or obtained by hydrogenating or dehydrogenating these fats and oils or hydrolyzed fatty acids. Moreover, the material of the fats and oils is not specifically limited, and may be plant fats and oils, and animal fats and oils. Specifically, palm oil, soybean oil, olive oil, cottonseed oil, coconut oil, palm kernel oil, beef tallow, lard, or fish oil may be used.

In this disclosure (inclusive of the production examples and examples mentioned below), the contents (mass%) of the glycerin fatty acid monoester, diester and triester in the glycerin fatty acid ester were measured according to the method as described in WO 2014/098155 A1 (PTL 1). Moreover, the contents (mass%) of the fatty acid components were measured by performing saponification and methyl esterification to the glycerin fatty acid monoester according to standard methods for the analysis of fats, oils and related materials established by Japan Oil Chemists' Society, via GPC analysis.

In another favorable example for the rubber composition for tire of this disclosure, the fatty acids constituting the glycerin fatty acid ester preferably have 8 to 22 carbon atoms, more preferably 12 to 18 carbon atoms, further more preferably 14 to 18 carbon atoms. Fatty acids with 8 to 22 carbon atoms are easy to obtain, and by compounding a glycerin fatty acid ester with such fatty acids as constituent fatty acids, it is possible to balance the processability, the low loss property, the breaking resistance and the wear resistance of the rubber composition at a high level.

Here, among the two or more fatty acids constituting the glycerin fatty acid ester, one among the most fatty acid component and a second most fatty acid component is a fatty acid with 16 carbon atoms, and the other is a fatty acid with 18 carbon atoms. Fatty acids with 16 carbon atoms and fatty acids with 18 carbon atoms are easy to obtain, and by compounding a glycerin fatty acid ester with such fatty acids as constituent fatty acids, it is possible to balance the processability, the low loss property, the breaking resistance and the wear resistance of the rubber composition at a high level.

A mass ratio of the fatty acid with 16 carbon atoms and the fatty acid with 18 carbon atoms is preferably 90/10 to 10/90, more preferably 80/20 to 20/80, further more preferably 75/25 to 25/75. By compounding a glycerin fatty acid ester with a mixed fatty acid with a mass ratio of the fatty acid with 16 carbon atoms and the fatty acid with 18 carbon atoms of 90/10 to 10/90 as a material, it is possible to further improve the processability, the low loss property, the breaking resistance and the wear resistance of the rubber composition.

A compounding amount of the glycerin fatty acid ester is 0.5 to 20 parts by mass per 100 parts by mass of the silica. In this case, it is possible to sufficiently improve the processability, the low loss property, the breaking resistance and the wear resistance of the rubber composition.

In another favorable example for the rubber composition for tire of this disclosure, the activator (D) is at least one selected from thiourea, diethylthiourea or thiadiazoles. In this case, there is a high effect such that the silane coupling agent (C) couples the diene based rubber (A) and the silica (B), and it is possible to further improve the processability, the low loss property, the breaking resistance and the wear resistance of the rubber composition.

The tire of this disclosure uses the aforementioned rubber composition for tire. The tire of this disclosure uses the aforementioned rubber composition for tire, and thus has small rolling resistance, and excellent breaking resistance and wear resistance.

(Advantageous Effect)

According to this disclosure, it is possible to provide a rubber composition for tire excellent in processability, low loss property, breaking resistance and wear resistance. Moreover, according to this disclosure, it is possible to further provide a tire with small rolling resistance, and excellent breaking resistance and wear resistance.

DETAILED DESCRIPTION

<Rubber composition for tire>

Hereinafter, the rubber composition for tire of this disclosure is described in details based on its embodiment.
The rubber composition for tire of this disclosure is a rubber composition for tire obtainable by a method for producing a rubber composition comprising:

(a) preparing a preliminary composition by preparing a first mixture containing all of or a part of a diene based rubber (A), a silica (B), a silane coupling agent (C) and at least one activator (D) selected from guanidines, cysteines, thioureas, ammonium thiocyanates, zinc dialkyl dithiophosphates or thiadiazoles, and containing a glycerin fatty acid ester (E), and kneading the first mixture; and
(b) preparing the rubber composition by adding a vulcanizing agent (F) into the preliminary composition to prepare a second mixture, and kneading the second mixture, wherein:

the glycerin fatty acid ester (E) is an ester of a glycerin and two or more fatty acids, a fatty acid component which is the most among the two or more fatty acids constituting the glycerin fatty acid ester being 10 to 90 mass% of all the fatty acids;
among the two or more fatty acids constituting the glycerin fatty acid ester (E), one among the most fatty acid component and a second most fatty acid component is a fatty acid with 16 carbon atoms, and the other is a fatty acid with 18 carbon atoms; and

a compounding amount of the glycerin fatty acid ester (E) is 0.5 to 20 parts by mass per 100 parts by mass of the silica (B).
In the rubber composition for tire of this disclosure, the glycerin fatty acid ester (E), which is an ester of a glycerin and two or more fatty acids, improves the dispersibility of the silica in the rubber composition, and thus is excellent in processability. Moreover, since the dispersibility of the silica in the rubber composition is high, the compounding effect of the silica is sufficiently exhibited, and the low loss property, the breaking resistance and the wear resistance are excellent as well.
The diene based rubber (A) used in the rubber composition for tire of this disclosure is exemplified as natural rubber (NR) and synthetic diene based rubber, and the synthetic diene based rubber is specifically exemplified as polybutadiene rubber (BR), synthetic polyisoprene rubber (IR), styrene-butadiene copolymer rubber (SBR), and styrene-isoprene copolymer rubber (SIR). These diene based rubbers may be used singly or as a blend of two or more. Moreover, the used diene based rubber may be either modified or unmodified.
The silica (B) used in the rubber composition for tire of this disclosure is not specifically limited, and is exemplified as wet silica (hydrous silicate), dry silica (anhydrous silicic acid), calcium silicate, and aluminum silicate. Among these, wet silica is preferable. These silicas may be used singly or in a combination of two or more. Moreover, a BET specific surface area of the silica (measured according to ISO 5794/1) is preferably within a range of 40 to 350 $m^2/g$, more preferably a range of 80 to 350 $m^2/g$, further more preferably a range of 120 to 350 $m^2/g$. A silica within this range of BET specific surface area has the advantage of the capability of achieving both the rubber reinforcement performance and the dispersibility in the diene based rubber (A). Such silica may be commercially available ones, such as trade names "Nipsil AQ" (BET specific surface area = 205 $m^2/g$), "Nipsil KQ", made by Tosoh Silica Corporation, and trade name "Ultrasil VN3" (BET specific surface area = 175 $m^2/g$), made by Degussa AG.
A compounding amount of the silica (B) is preferably within a range of 20 to 120 parts by mass, more preferably a range of 30 to 100 parts by mass per 100 parts by mass of the diene based rubber (A). If the compounding amount of the silica (B) is 20 parts by mass or more per 100 parts by mass of the diene based rubber (A), it is possible to sufficiently improve the low loss property, the breaking resistance and the wear resistance of the rubber composition, and if 120 parts by mass or less, it is possible to sufficiently improve the processability of the rubber composition.

In order to improve the dispersibility of the silica (B) to the diene based rubber (A), the rubber composition for tire of this disclosure contains the silane coupling agent (C). The silane coupling agent (C) reacts with the diene based rubber (A), and simultaneously reacts with the silica (B), and thus is capable of improving the dispersibility of the silica (B) to the diene based rubber (A).

The silane coupling agent (C) is preferably a compound represented with the following general formula (I).

$$(R^1O)_{3-p}(R^2)_pSi\text{-}R^3\text{-}S_a\text{-}R^3\text{-}Si(OR^1)_{3-r}(R^2)_r \ldots \qquad (I)$$

In the formula (I), $R^1$ may be either identical or different if plural, and are respectively C1 to C8 straight chain, cyclic or branched alkyl group, C2 to C8 straight chain or branched alkoxy alkyl group, or hydrogen atom; $R^2$ may be either identical or different if plural, and are respectively C1 to C8 straight chain, cyclic or branched alkyl group; and $R^3$ may be either identical or different, and are respectively C1 to C8 straight chain or branched alkylene group. Moreover, a is 2 to 6 on average; p and r may be either identical or different, and are respectively 0 to 3 on average. However, p and r cannot be both 3.

The compound of the formula (I) is specifically exemplified as bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, and bis(2-monoethoxydimethylsilylethyl)disulfide.

Moreover, the silane coupling agent (C) is also preferably a compound represented with the following general formula (II).

$$(R^4O)_{3-s}(R^5)_sSi\text{-}R^6\text{-}S_k\text{-}R^7\text{-}S_k\text{-}R^6\text{-}Si(OR^4)_{3-t}(R^5)_t \ldots \qquad (II)$$

In the formula (II), $R^4$ may be either identical or different if plural, and are respectively C1 to C8 straight chain, cyclic or branched alkyl group, C2 to C8 straight chain or branched alkoxy alkyl group, or hydrogen atom; $R^5$ may be either identical or different if plural, and are respectively C1 to C8 straight chain, cyclic or branched alkyl group; and $R^6$ may be either identical or different, and are respectively C1 to C8 straight chain or branched alkylene group. Moreover, $R^7$ is a divalent group represented with either one of the general formulae: $(\text{-S-}R^8\text{-S-})$, $(\text{-}R^9\text{-}S_{m1}\text{-}R^{10}\text{-})$ and $(\text{-}R^{11}\text{-}S_{m2}\text{-}R^{12}\text{-}S_{m3}\text{-}R^{13}\text{-})$ (wherein $R^8$ to $R^{13}$ are respectively C1 to C20 divalent hydrocarbon group, divalent aromatic group, or divalent organic group containing a hetero element other than sulfur and oxygen; m1, m2 and m3 may be either identical or different, each being 1 or more and less than 4 on average); the plurality of k may be either identical or different, each being 1 to 6 on average; and s and t are respectively 0 to 3 on average. However, s and t cannot be both 3.

Specifically, the compound of the aforementioned formula (II) is preferably compounds represented with:

average composition formula: $(CH_3CH_2O)_3Si\text{-}(CH_2)_3\text{-}S_2\text{-}(CH_2)_6\text{-}S_2\text{-}(CH_2)_3\text{-}Si(OCH_2CH_3)_3$,
average composition formula: $(CH_3CH_2O)_3Si\text{-}(CH_2)_3\text{-}S_2\text{-}(CH_2)_{10}\text{-}S_2\text{-}(CH_2)_3\text{-}Si(OCH_2CH_3)_3$,
average composition formula: $(CH_3CH_2O)_3Si\text{-}(CH_2)_3\text{-}S_3\text{-}(CH_2)_6\text{-}S_3\text{-}(CH_2)_3\text{-}Si(OCH_2CH_3)_3$,
average composition formula: $(CH_3CH_2O)_3Si\text{-}(CH_2)_3\text{-}S_4\text{-}(CH_2)_6\text{-}S_4\text{-}(CH_2)_3\text{-}Si(OCH_2CH_3)_3$,
average composition formula: $(CH_3CH_2O)_3Si\text{-}(CH_2)_3\text{-}S\text{-}(CH_2)_6\text{-}S_2\text{-}(CH_2)_6\text{-}S\text{-}(CH_2)_3\text{-}Si(OCH_2CH_3)_3$,
average composition formula: $(CH_3CH_2O)_3Si\text{-}(CH_2)_3\text{-}S\text{-}(CH_2)_6\text{-}S_{2.5}\text{-}(CH_2)_6\text{-}S\text{-}(CH_2)_3\text{-}Si(OCH_2CH_3)_3$,
average composition formula: $(CH_3CH_2O)_3Si\text{-}(CH_2)_3\text{-}S\text{-}(CH_2)_6\text{-}S_3\text{-}(CH_2)_6\text{-}S\text{-}(CH_2)_3\text{-}Si(OCH_2CH_3)_3$,
average composition formula: $(CH_3CH_2O)_3Si\text{-}(CH_2)_3\text{-}S\text{-}(CH_2)_6\text{-}S_4\text{-}(CH_2)_6\text{-}S\text{-}(CH_2)_3\text{-}Si(OCH_2CH_3)_3$,
average composition formula: $(CH_3CH_2O)_3Si\text{-}(CH_2)_3\text{-}S\text{-}(CH_2)_{10}\text{-}S_2\text{-}(CH_2)_{10}\text{-}S\text{-}(CH_2)_3\text{-}Si(OCH_2CH_3)_3$,
average composition formula: $(CH_3CH_2O)_3Si\text{-}(CH_2)_3\text{-}S_4\text{-}(CH_2)_6\text{-}S_4\text{-}(CH_2)_6\text{-}S_4\text{-}(CH_2)_3\text{-}Si(OCH_2CH_3)_3$,
average composition formula: $(CH_3CH_2O)_3Si\text{-}(CH_2)_3\text{-}S_2\text{-}(CH_2)_6\text{-}S_2\text{-}(CH_2)_6\text{-}S_2\text{-}(CH_2)_3\text{-}Si(OCH_2CH_3)_3$, and
average composition formula: $(CH_3CH_2O)_3Si\text{-}(CH_2)_3\text{-}S\text{-}(CH_2)_6\text{-}S_2\text{-}(CH_2)_6\text{-}S_2\text{-}(CH_2)_6\text{-}S\text{-}(CH_2)_3\text{-}Si(OCH_2CH_3)_3$.

The silane coupling agent (C) is specifically preferably a compound represented with the aforementioned general formula (I). This is because that in the case of using a compound represented with general formula (I), it is easy to cause the activity of polysulfide bond sites, where the activator (D) mentioned below reacts with the diene based rubber (A). Here, the aforementioned silane coupling agent (C) may be used singly or in a combination of two or more.

The compounding amount of the silane coupling agent (C) is preferably within a range of 1 to 20 parts by mass, more preferably a range of 3 to 20 parts by mass per 100 parts by mass of the silica (B). If the compounding amount of the silane coupling agent (C) is 1 part by mass or more per 100 parts by mass of the silica (B), the compounding effect of the silica (B) is sufficiently improved, and it is possible to sufficiently improve the low loss property of the rubber composition. Moreover, if the compounding amount of the silane coupling agent (C) is 20 parts by mass or less per 100 parts by mass of the silica (B), it is possible to suppress increase of the material cost of the rubber composition.

The activator (D) used in the rubber composition for tire of this disclosure is selected from guanidines, cysteines, thioureas, ammonium thiocyanate, zinc dialkyl dithiophosphate or thiadiazoles. The activator (D) has an activation effect to the polysulfide bond sites where it reacts with the diene based rubber (A).

The guanidines are exemplified as 1,3-diphenylguanidine (DPG), 1,3-di-o-tolylguanidine, 1-o-tolylbiguanide, di-o-tolylguanidine salt of dicatechol borate, 1,3-di-o-cumenylguanidine, 1,3-di-o-biphenylguanidine, and 1,3-di-o-cumenyl-2-propionylguanidine. Among these, from the viewpoint of reactivity, 1,3-diphenylguanidine, 1,3-di-o-tolylguanidine and 1-o-tolylbiguanide are preferable, and 1,3-diphenylguanidine is more preferable.

The sulfenamides are exemplified as N-cyclohexyl-2-benzothiazolylsulfenamide (CZ), N,N-dicyclohexyl-2-benzothiazolylsulfenamide, N-tert-butyl-2-benzothiazolylsulfenamide (NS), N-oxydiethylene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-pentyl-2-benzothiazolylsulfenamide, N-octyl-2-benzothiazolylsulfenamide, N-2-ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-dipentyl-2-benzothiazolylsulfenamide, N,N-dioctyl-2-benzothiazolylsulfenamide, N,N-di-2-ethylhexyl benzothiazolylsulfenamide, N-decyl-2-benzothiazolylsulfenamide, N,N-didodecyl-2-benzothiazolylsulfenamide, and N,N-distearyl-2-benzothiazolylsulfenamide. Among these, from the viewpoint of reactivity, N-cyclohexyl-2-benzothiazolylsulfenamide and N-tert-butyl-2-benzothiazolylsulfenamide are preferable.

Thiazoles are exemplified as 2-mercaptobenzothiazole (M), di-2-benzothiazolyldisulfide (DM), zinc 2-mercaptobenzothiazolate, cyclohexylamine of 2-mercaptobenzothiazolate, 2-(N,N-diethylthiocarbamoylthio)benzothiazole, 2-(4'-morpholinodithio)benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazolate, 2-mercapto-6-nitrobenzothiazole, 2-mercaptonaphtho[1,2-d]thiazol, 2-mercapto-5-methoxybenzothiazole, and 6-amino-2-mercaptobenzothiazole. Among these, from the viewpoint of reactivity, 2-mercaptobenzothiazole and di-2-benzothiazolyldisulfide are preferable.

The thiurams are exemplified as tetramethylthiuram disulfide, tetraethylthiuram disulfide, tetrapropylthiuram disulfide, tetraisopropylthiuram disulfide, tetrabutylthiuram disulfide, tetrapentylthiuram disulfide, tetrahexylthiuram disulfide, tetraheptylthiuram disulfide, tetraoctylthiuram disulfide, tetranonylthiuram disulfide, tetradecylthiuram disulfide, tetradodecylthiuram disulfide, tetrastearylthiuram disulfide, tetrabenzylthiuram disulfide (TBzTD), tetrakis(2-ethylhexyl)thiuram disulfide, tetramethylthiuram monosulfide, tetraethylthiuram monosulfide, tetrapropylthiuram monosulfide, tetraisopropylthiuram monosulfide, tetrabutylthiuram monosulfide, tetrapentylthiuram monosulfide, tetrahexylthiuram monosulfide, tetraheptylthiuram monosulfide, tetraoctylthiuram monosulfide, tetranonylthiuram monosulfide, tetradecylthiuram monosulfide, tetradodecylthiuram monosulfide, tetrastearylthiuram monosulfide, tetrabenzylthiuram monosulfide, and dipentamethylenethiuram tetrasulfide. Among these, from the viewpoint of reactivity, tetrakis(2-ethylhexyl)thiuram disulfide and tetrabenzylthiuram disulfide are preferable.

The thioureas are exemplified as thiourea, N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea. Among these, from the viewpoint of reactivity, thiourea, N,N'-diethylthiourea, trimethylthiourea, N,N'-diphenylthiourea and N,N'-dimethylthiourea are preferable, and N,N'-diethylthiourea is more preferable.

The dithiocarbamates are exemplified as zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc N-pentamethylenedithiocarbamate, zinc N-ethyl-N-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper N-pentamethylenedithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium N-pentamethylenedithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate, ferric di(2-ethylhexyl)dithiocarbamate, ferric didecyldithiocarbamate, ferric didodecyldithiocarbamate, ferric N-pentamethylenedithiocarbamate, and ferric dibenzyldithiocarbamate. Among these, from the viewpoint of reactivity, zinc dibenzyldithiocarbamate, zinc N-ethyl-N-phenyldithiocarbamate, zinc dimethyldithiocarbamate and copper dimethyldithiocarbamate are preferable.

The xanthates are exemplified as zinc methylxanthate, zinc ethylxanthate, zinc propylxanthate, zinc isopropylxanthate, zinc butylxanthate, zinc pentylxanthate, zinc hexylxanthate, zinc heptylxanthate, zinc octylxanthate, zinc 2-ethylhexylxanthate, zinc decylxanthate, zinc dodecylxanthate, potassium methylxanthate, potassium ethylxanthate, potassium propylxanthate, potassium isopropylxanthate, potassium butylxanthate, potassium pentylxanthate, potassium hexylxanthate, potassium heptylxanthate, potassium octylxanthate, potassium 2-ethylhexylxanthate, potassium decylxanthate, potassium dodecylxanthate, sodium methylxanthate, sodium ethylxanthate, sodium propylxanthate, sodium isopropylxanthate, sodium butylxanthate, sodium pentylxanthate, sodium hexylxanthate, sodium heptylxanthate, sodium octylxanthate, sodium 2-ethylhexylxanthate, sodium decylxanthate, and sodium dodecylxanthate. Among these, from the viewpoint of reactivity, zinc isopropylxanthate is preferable.

The cysteines are exemplified as (L-)cysteine, N-acetyl-L-cysteine, (L-)cysteine hydrochloride, (L-)cysteine ethyl ester hydrochloride, and (L-)cysteine methyl ester hydrochloride. Among these, from the viewpoint of reactivity, L-cysteine is preferable.

The zinc dialkyl dithiophosphate (ZnDTP) is exemplified as zinc dialkyl dithiophosphates with C4 to C12 alkyl group.

The thiadiazoles are exemplified as 2,5-dimercapto-1,3,4-thiadiazole (MTD), 2-amino-5-mercapto-1,3,4-thiadiazole, and 2-amino-5-trifluoromethyl-1,3,4-thiadiazole. Among these, from the viewpoint of reactivity, 2,5-dimercapto-1,3,4-thiadiazole is preferable.

As the activator (D), from the viewpoint of activation effect, thiourea (TU), diethylthiourea (DEU) and thiadiazoles are preferable. These activators (D) may be used singly or in a combination of two or more.

In this disclosure, the number of molecules (number of moles) of the activator (D) in the rubber composition in the process (a) of kneading is preferably within a range of 0.1 to 2.0 times, more preferably a range of 0.3 to 1.5 times to the number of molecules (number of moles) of the silane coupling agent (C). If the number of molecules (number of moles) of the activator (D) is 0.1 times or more to the number of molecules (number of moles) of the silane coupling agent (C), the silane coupling agent (C) is sufficiently activated, and if 1.5 times or less, the vulcanization rate is not greatly affected.

The compounding amount of the activator (D) is preferably 0.01 to 6 parts by mass, more preferably 0.05 to 2.5 parts by mass, further more preferably 0.1 to 1.5 parts by mass per 100 parts by mass of the diene based rubber (A). If the compounding amount of the activator (D) is 0.01 parts by mass or more per 100 parts by mass of the diene based rubber (A), the low loss property of the rubber composition is sufficiently improved, and if 6 parts by mass or less, the processability of the rubber composition is sufficiently excellent as well.

The activator (D) is used as an accelerator of a sulfur vulcanization as well. Therefore, it is possible to not compound all of it in the initial process (a), but to appropriately (partially) compound it in the process (b) if desired. Moreover, if there is a kneading process between the process (a) and the process (b), it is possible to compound of a part of the activator (D) in the intermediate kneading process.

The glycerin fatty acid ester (E) used in the rubber composition for tire of this disclosure is an ester of a glycerin and two or more fatty acids, the most fatty acid component among the two or more fatty acids constituting the glycerin fatty acid ester being 10 to 90 mass% of all the fatty acids. Here, the glycerin fatty acid ester refers to a compound formed via an ester bond between at least one of 3 OH groups of the glycerin and a COOH group of the fatty acids.

Moreover, the mass ratio of the two or more fatty acids is that the most fatty acid component is 10 to 90 mass% in all the fatty acids.

However, from the viewpoint of further improving the processability, the low loss property, the breaking resistance and the wear resistance of the rubber composition, 15 to 80 mass% is preferable, 20 to 70 mass% is more preferable, and 30 to 60 mass% is further more preferable.

Here, the glycerin fatty acid ester may be any one of: a glycerin fatty acid monoester formed via esterification of one glycerin molecule and one fatty acid molecule (monoester component); a glycerin fatty acid diester formed via esterification of one glycerin molecule and two fatty acid molecules (diester component); a glycerin fatty acid triester formed via esterification of one glycerin molecule and three fatty acid molecules (triester component); and a mixture of these, while glycerin fatty acid monoester is preferable. Here, if the glycerin fatty acid ester is a mixture of a glycerin fatty acid monoester, a glycerin fatty acid diester and a glycerin fatty acid triester, the content of each ester may be measured with gel permeation chromatography (GPC). Moreover, the two fatty acids constituting the glycerin fatty acid diester and the three fatty acids constituting the glycerin fatty acid triester may be either identical or different.

The glycerin fatty acid ester used in the rubber composition for tire of this disclosure is an ester of a glycerin and two or more fatty acids, and may be a glycerin fatty acid diester or a glycerin fatty acid triester formed via esterification of two or more fatty acids and one glycerin molecule, but is preferably a mixture of a glycerin fatty acid monoester formed via esterification of one glycerin molecule and one type of fatty acid molecule among the aforementioned two or more fatty acids, and a glycerin fatty acid monoester formed via esterification of one glycerin molecule and another type of fatty acid.

In the rubber composition for tire of this disclosure, the glycerin fatty acid ester preferably contains 50 to 100 mass%, more preferably 60 to 99 mass%, further more preferably 85 to 98 mass% of the glycerin fatty acid monoester. By compounding a glycerin fatty acid ester containing 50 to 100 mass% of a glycerin fatty acid monoester, it is possible to further improve the processability, the low loss property, the breaking resistance and the wear resistance of the rubber composition. Further, in this disclosure, it is also possible to use a glycerin fatty acid ester containing the materials, i.e., the glycerin and the fatty acid, as unreacted matters.

From the viewpoint of the processability, the low loss property, the breaking resistance and the wear resistance of the rubber composition, the two or more fatty acids as materials of the glycerin fatty acid ester (i.e., constituent fatty acids of the glycerin fatty acid ester) are preferably C8 to C22 fatty acids, more preferably C12 to C18 fatty acids, further more preferably C14 to C18 fatty acids, and even further more preferably C16 fatty acids and C18 fatty acids. Moreover, among the two or more fatty acids as materials of the glycerin fatty acid ester, among the most fatty acid component and the second most fatty acid component, one is a C16 fatty acid, and the other is a C18 fatty acid.

If the glycerin fatty acid ester is an ester of a glycerin, a C16 fatty acid and a C18 fatty acid, a mass ratio of the C16 fatty acid and the C18 fatty acid (C16 fatty acid/C18 fatty acid) is preferably within a range of 90/10 to 10/90, more preferably a range of 80/20 to 20/80, further more preferably 75/25 to 25/75. If the mass ratio of the C16 fatty acid and the C18 fatty acid is within this range, it is possible to further improve the processability, the low loss property, the breaking resistance and the wear resistance of the rubber composition.

The constituent fatty acids of the glycerin fatty acid ester may be either straight chain or branched, but is preferably straight chain. Moreover, it may be either saturated fatty acid or unsaturated fatty acid, but is preferably saturated fatty acid.

The constituent fatty acids of the glycerin fatty acid ester are specifically exemplified as caprylic acid, pelargonic acid, capric acid, lauric acid, myristic acid, palmitic acid, stearic acid, isostearic acid, oleic acid, linoleic acid, linolenic acid, arachic acid, arachidonic acid, and behenic acid, and among these, lauric acid, myristic acid, palmitic acid and stearic acid are preferably, and palmitic acid and stearic acid are more preferable.

Specifically, the glycerin fatty acid ester is preferably monoglyceride laurate, monoglyceride myristate, monoglyceride palmitate and monoglyceride stearate, more preferably monoglyceride palmitate and monoglyceride stearate.

From the viewpoint of the processability of the rubber composition, the compounding amount of the glycerin fatty acid ester (E) is 0.5 parts by mass or more, more preferably 1 part by mass or more, further more preferably 1.5 parts by mass or more per 100 parts by mass of the silica (B). Moreover, from the viewpoint of the breaking resistance of the rubber composition, it is 20 parts by mass or less, more preferably 10 parts by mass or less, further more preferably 5 parts by mass or less per 100 parts by mass of the silica (B).

From the processability of the rubber composition, the compounding amount of the glycerin fatty acid ester (E) is 0.5 parts by mass or more, more preferably 1 part by mass or more, further more preferably 1.5 parts by mass or more per 100 parts by mass of the diene based rubber (A). Moreover, from the viewpoint of the breaking resistance of the rubber composition, it is preferably 10 parts by mass or less, more preferably 5 parts by mass or less, further more preferably 3 parts by mass or less per 100 parts by mass of the diene based rubber (A).

The vulcanizing agent (F) used in the rubber composition for tire of this disclosure is exemplified as sulfur.

The compounding amount of the vulcanizing agent (F) is preferably within a range of 0.1 to 10.0 parts by mass, more preferably 1.0 to 5.0 parts by mass per 100 parts by mass of the diene based rubber (A) in terms of sulfur. If the compounding amount of the vulcanizing agent (F) is 0.1 parts by mass or more in terms of sulfur, it is possible to ensure the fracture strength, and the wear resistance, of the vulcanized rubber, and if 10.0 parts by mass or less, it is possible to sufficiently ensure the rubber elasticity.

From the viewpoint of the breaking resistance and the wear resistance of the rubber composition, the rubber composition for tire of this disclosure preferably further contains a carbon black. The carbon black is not specifically limited, and is exemplified as carbon blacks of GPF, FEF, HAF, ISAF, SAF grade. These carbon blacks may be used singly or in a combination of two or more. Moreover, the compounding amount of the carbon black is preferably within a range of 1 to 30 parts by mass, more preferably a range of 5 to 20 parts by mass per 100 parts by mass of the diene based rubber (A).

The rubber composition for tire of this disclosure is obtainable by a method for producing a rubber composition comprising: (a) preparing a preliminary composition by preparing a first mixture containing all of or a part of the diene based rubber (A), the silica (B), the silane coupling agent (C) and the activator (D), and containing the glycerin fatty acid ester (E), and kneading the first mixture; and (b) preparing the rubber composition by adding the vulcanizing agent (F) into the preliminary composition to prepare a second mixture, and kneading the second mixture.

In this disclosure, in the process (a) of kneading, all of or a part of the activators (D) and the glycerin fatty acid ester (E) are added and kneaded in order to increase the coupling activity of the silane coupling agent (C), improve the dispersibility of the silica (B), suppress increase the pre-vulcanization viscosity of the rubber composition, and improve the processability and the low loss property due to reduction of the pre-vulcanization viscosity.

In the process (a) of kneading, it is preferable to knead the diene based rubber (A), the silica (B) and the silane coupling agent(C), glycerin fatty acid ester (E), and then add all of or a part of the activators (D), and further perform kneading. In this case, it is possible to favorably suppress reduction of activity improvement effect of coupling function obtained by compounding the activator (D) and the glycerin fatty acid ester (E). This is because that after the reaction of the silica (B) and the silane coupling agent (C) has proceeded sufficiently, it becomes possible to proceed with the reaction of the silane coupling agent (C) and the diene based rubber (A).

In the process (a) of kneading, it is more preferable to set the time before adding the activator (D) during the process (a) after adding the diene based rubber (A), the silica (B), and the silane coupling agent(C), the glycerin fatty acid ester (E) to 10 to 180 seconds. The lower limit of this time is more preferably 30 seconds or more, and its upper limit is more preferably 150 seconds or less, further more preferably 120 seconds or less. If this time is 10 seconds or more, it is possible to proceed with the reaction of the silica (B) and the silane coupling agent (C). On the other hand, if this time exceeds 180 seconds, since the reaction of the silica (B) and the silane coupling agent (C) has sufficiently proceeded, it is difficult to enjoy further effect. From the viewpoint of the productivity, it is preferable to set the upper limit to 180 seconds.

A maximum temperature of the rubber composition in the process (a) of kneading is preferably within a range of 120°C to 190°C. This is in order to sufficiently proceed with the reaction of the silica (B) and the silane coupling agent (C). From this viewpoint, the maximum temperature of the rubber composition in the process (a) of kneading is more preferably within a range of 130°C to 190°C, further more preferably within a range of 140°C to 180°C.

A maximum temperature of the rubber composition in the process (b) of kneading is preferably within a range of 60°C to 140°C, more preferably within a range of 80°C to 120°C, further more preferably within a range of 100°C to 120°C. Moreover, from the viewpoint of preventing premature vulcanization, when proceeding from the process (a) to the process (b), it is preferable to reduce the temperature of the rubber composition to 10°C or more lower than the temperature of the process (a) before proceeding to the process (b).

The kneading process of the rubber composition in this disclosure includes at least two processes, i.e., the process (a) of kneading without the vulcanizing agent (F), and the process (b) of kneading with the vulcanizing agent (F), but may include an intermediate phase of kneading without the vulcanizing agent (F) if necessary.

In the rubber composition for tire of this disclosure, other than the diene based rubber (A), the silica (B), the silane coupling agent (C), the activator (D), the glycerin fatty acid ester (E), the vulcanizing agent (F) and the carbon black, it is possible to appropriately compound compounding agents ordinarily used in rubber industry, e.g., softener, stearic acid, zinc oxide, and age resistor, as long as not inhibiting the purpose of this disclosure. These compounding agents are favorably commercially available ones. Moreover, these compounding agent are kneaded during the process (a) or the process (b) of kneading, or during the intermediate phase between the process (a) and the process (b).

In the kneading, a kneading apparatus, such as Banbury mixer, roll, or intensive mixer may be used.

The rubber composition kneaded as described above may be further made into a vulcanized rubber via further warming, extrusion, or vulcanization.

The warming conditions are not specifically limited, and various conditions such as warming temperature, warming time, and warming apparatus may be appropriately selected depending on the purpose. The warming apparatus is exemplified as mill, ordinarily used for warming rubber compositions.

Moreover, the extrusion conditions are not specifically limited, and various conditions such as extrusion time, extrusion rate, extrusion apparatus, and extrusion temperature may be appropriately selected according to the purpose. The extrusion apparatus is exemplified as extruder, ordinarily used for extrusion of rubber compositions for tire. The extrusion temperature may be appropriately decided.

Moreover, the apparatus, method, and conditions for performing the vulcanization are not specifically limited, and may be appropriately selected according to the purpose. The apparatus for performing the vulcanization is exemplified as a vulcanizing molding machine, based on a mold ordinarily used in vulcanization of rubber compositions for tire.

The rubber composition for tire of this disclosure may be utilized in the tire mentioned below.

<Tire>

The tire of this disclosure uses the aforementioned rubber composition for tire. The tire of this disclosure uses the rubber composition for tire, and thus has small rolling resistance, and excellent breaking resistance and wear resistance. Here, the portions of tire to use the rubber composition for tire is exemplified as tread.

Depending on the type of the applied tire, the tire of this disclosure may be obtained via vulcanization after molding by using an unvulcanized rubber composition, or molding by using a half-crosslinked rubber composition (half-vulcanized rubber) subjected to prevulcanization, and then performing regular vulcanization. Here, the tire of this disclosure is preferably a pneumatic tire, and the gas filled in the pneumatic tire may be ordinary air, air with adjusted oxygen partial pressure, or inactive gases such as nitrogen, argon, and helium.

EXAMPLES

This disclosure will be explained in further detail below according to examples, while this disclosure is not limited to the examples below.

<Production and evaluation of rubber composition>

According to the formulation as shown in Tables 1 to 4, by using an ordinary Banbury mixer, and kneading in the order of a first kneading process and a second kneading process, the rubber composition was produced. Here, the maximum temperature of the rubber composition in the first kneading process was set to 170°C, and the maximum temperature of the rubber composition in the second kneading process was set to 110°C. Here, the first kneading process corresponds to the process (a), and the second kneading process corresponds to the process (b). With respect to the obtained rubber composition, the processability, the breaking resistance, the low loss property and the wear resistance were evaluated according to the following methods.

(1) Processability

The pre-vulcanization viscosity of the obtained rubber compositions was measured according to JIS K 6300-1:2001 (Mooney viscosity), each represented with an index of its reciprocal, with the pre-vulcanization viscosity of Comparative Example 1 as 100 in Table 1 and Table 2, the pre-vulcanization viscosity of Comparative Example 14 as 100 in Table 3, and the pre-vulcanization viscosity of Comparative Example 17 as 100 in Table 4. A larger index value shows lower pre-vulcanization viscosity and better processability.

(2) Breaking resistance

The obtained rubber compositions were subjected to 20 minutes of vulcanization at 160°C, and then tensile test was performed at room temperature (23°C) according to JIS K6251, to measure their Tb (tensile strength (MPa)), each of which was represented with an index, with Comparative Example 1 as 100 in Table 1 and Table 2, Comparative Example 14 as 100 in Table 3, and Comparative Example 17 as 100 in Table 4. A larger index value shows larger tensile strength and better breaking resistance.

(3) Low loss property

The obtained rubber compositions were subjected to 20 minutes of vulcanization at 160°C, and their $\tan \delta$ was measured by using a viscoelasticity measurement apparatus (made by Rheometrics Inc.) at a temperature of 60°C, a dynamic strain of 5% and a frequency of 15 Hz, each of which was represented with an index of its reciprocal, with the $\tan \delta$ of Comparative Example 1 as 100 in Table 1 and Table 2, the $\tan \delta$ of Comparative Example 14 as 100 in Table 3, and the $\tan \delta$ of Comparative Example 17 as 100 in Table 4. A larger index value shows smaller $\tan \delta$ and better low loss property.

(4) Wear resistance

The obtained rubber compositions were subjected to 20 minutes of vulcanization at 160°C, and their abrasion amount was measured at 23°C by using a Lambourn abrasion tester according to JIS K 6264-2:2005, and was each represented with an index according to the following formula, with a reciprocal of the abrasion amount of Comparative Example 1 as 100 in Table 1 and Table 2, a reciprocal of the abrasion amount of Comparative Example 14 as 100 in Table 3, and a reciprocal of the abrasion amount of Comparative Example 17 as 100 in Table 4.

$$\text{Wear resistance index} = \{(\text{abrasion amount of vulcanized rubber} \\ \text{composition of Comparative Example 1, 14 or 17})/(\text{abrasion amount of} \\ \text{sample vulcanized rubber composition})\} \times 100$$

A larger index value shows less abrasion amount and better wear resistance.

[Table 1]

| | | | | Compara-tive Example 1 | Compara-tive Example 2 | Compara-tive Example 3 | Compara-tive Example 4 | Compara-tive Example 5 | Compara-tive Example 6 | Compara-tive Example 7 | Compara-tive Example 8 | Compara-tive Example 9 |
|---|---|---|---|---|---|---|---|---|---|---|---|---|
| Formulation | First kneading process | SBR *1 | Parts by mass | 100 | 100 | 100 | 100 | 100 | 100 | 100 | 100 | 100 |
| | | BR *2 | | - | - | - | - | - | - | - | - | - |
| | | Aromatic oil *3 | | 20 | 20 | 20 | 20 | 20 | 20 | 20 | 20 | 20 |
| | | Carbon black *4 | | 10 | 10 | 10 | 10 | 10 | 10 | 10 | 10 | 10 |
| | | Silica *5 | | 70 | 70 | 70 | 70 | 70 | 70 | 70 | 70 | 70 |
| | | Silane coupling agent *6 | | 5.5 | 5.5 | 5.5 | 5.5 | 5.5 | 5.5 | 5.5 | 5.5 | 5.5 |
| | | Glycerin fatty acid ester A *7 | | - | - | - | - | - | - | - | - | - |
| | | Glycerin fatty acid ester B *8 | | - | - | - | - | - | - | - | - | - |
| | | Glycerin fatty acid ester C *9 | | - | 2 | - | - | - | 2 | - | 2 | - |
| | | Glycerin fatty acid ester D *10 | | - | - | - | - | - | - | - | - | - |
| | | Stearic acid | | 2.0 | 2.0 | 2.0 | 2.0 | 2.0 | 2.0 | 2.0 | 2.0 | 2.0 |
| | | Age resistor 6C *11 | | 1.0 | 1.0 | 1.0 | 1.0 | 1.0 | 1.0 | 1.0 | 1.0 | 1.0 |
| | | Vulcanization accelerator DPG *12 | | - | - | - | - | - | - | - | - | - |
| | | Thiourea *13 | | - | - | 0.6 | - | - | - | - | - | - |
| | | Diethylthiou-rea *14 | | - | - | - | 1.0 | - | - | - | - | - |

EP 3 266 817 B1

13

(continued)

| | | | Compara-tive Example 1 | Compara-tive Example 2 | Compara-tive Example 3 | Compara-tive Example 4 | Compara-tive Example 5 | Compara-tive Example 6 | Compara-tive Example 7 | Compara-tive Example 8 | Compara-tive Example 9 |
|---|---|---|---|---|---|---|---|---|---|---|---|
| | | Thiadiazole *15 | - | - | - | - | - | - | - | - | 0.1 |
| | | Vulcanization accelerator M *16 | - | - | - | - | 1.0 | 1.0 | - | - | - |
| | | Vulcanization accelerator TBzTD *17 | - | - | - | - | - | - | 2.0 | 2.0 | - |
| Second kneading process | | Zinc oxide | 2.5 | 3.0 | 3.0 | 3.0 | 3.0 | 3.0 | 3.0 | 3.0 | 3.0 |
| | | Stearic acid | - | - | - | - | - | - | - | - | - |
| | | Vulcanization accelerator DPG *12 | 1.40 | 1.40 | 0.80 | 0.80 | 0.80 | 0.80 | 0.80 | 0.80 | 0.8 |
| | | Vulcanization accelerator DM *18 | 2.00 | 2.00 | 2.00 | 2.00 | 2.00 | 2.00 | 2.00 | 2.00 | 2.00 |
| | | Vulcanization accelerator NS *19 | 0.70 | 0.70 | 0.70 | 0.70 | 0.70 | 0.70 | 0.70 | 0.70 | 0.70 |
| | | Vulcanization accelerator CZ *20 | - | - | - | - | - | - | - | - | - |
| | | Sulfur | 1.5 | 1.5 | 1.5 | 1.5 | 1.5 | 1.5 | 1.5 | 1.5 | 1.5 |

EP 3 266 817 B1

14

(continued)

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| Physical properties | Processability | Pre-vulcaniza-tion viscosity | 100 | 111 | 81 | 82 | 77 | 83 | 97 | 103 | 80 |
| | Tensile properties | Tb (breaking resistance) | 100 | 106 | 97 | 97 | 101 | 103 | 100 | 101 | 100 |
| | Viscoelasticity | Tan δ (low loss property) at 60°C | Index | 100 | 91 | 109 | 111 | 105 | 106 | 102 | 103 | 107 |
| | Wear resistance | Lambourn abrasion amount | 100 | 102 | 104 | 105 | 102 | 103 | 100 | 101 | 102 |

[Table 2]

| | | | | Comparative Example 10 | Comparative Example 11 | Example 1 | Example 2 | Example 3 | Example 4 | Comparative Example 12 | Example 5 | Comparative Example 13 |
|---|---|---|---|---|---|---|---|---|---|---|---|---|
| Formulation | First kneading process | SBR *1 | Parts by mass | 100 | 100 | 100 | 100 | 100 | 100 | 100 | 100 | 100 |
| | | BR *2 | | - | - | - | - | - | - | - | - | - |
| | | Aromatic oil *3 | | 20 | 20 | 20 | 20 | 20 | 20 | 20 | 20 | 20 |
| | | Carbon black *4 | | 10 | 10 | 10 | 10 | 10 | 10 | 10 | 10 | 10 |
| | | Silica *5 | | 70 | 70 | 70 | 70 | 70 | 70 | 70 | 70 | 70 |
| | | Silane coupling agent *6 | | 5.5 | 5.5 | 5.5 | 5.5 | 5.5 | 5.5 | 5.5 | 5.5 | 5.5 |
| | | Glycerin fatty acid ester A *7 | | - | - | - | - | - | - | 2 | - | - |
| | | Glycerin fatty acid ester B *8 | | 2 | 2 | - | - | - | - | - | - | - |
| | | Glycerin fatty acid ester C *9 | | - | - | 2 | 2 | 2 | - | - | 2 | - |
| | | Glycerin fatty acid ester D *10 | | - | - | - | - | - | 2 | - | - | - |
| | | Stearic acid | | 2.0 | 2.0 | 2.0 | 2.0 | 2.0 | 2.0 | 2.0 | - | - |
| | | Age resistor 6C *11 | | 1.0 | 1.0 | 1.0 | 1.0 | 1.0 | 1.0 | 1.0 | 1.0 | 1.0 |
| | | Vulcanization accelerator DPG *12 | | - | - | - | - | - | - | - | 1.2 | 1.2 |
| | | Thiourea *13 | | - | 0.6 | - | - | 0.6 | 0.6 | 0.6 | - | - |
| | | Diethylthiourea *14 | | - | - | 1.0 | - | - | - | - | - | - |
| | | Thiadiazole *15 | | - | - | - | 0.1 | - | - | - | - | - |

16

(continued)

| | | Comparative Example 10 | Comparative Example 11 | Example 1 | Example 2 | Example 3 | Example 4 | Comparative Example 12 | Example 5 | Comparative Example 13 |
|---|---|---|---|---|---|---|---|---|---|---|
| | Vulcanization accelerator M *16 | - | - | - | - | - | - | - | - | - |
| | Vulcanization accelerator TBzTD *17 | - | - | - | - | - | - | - | - | - |
| | Zinc oxide | 3.0 | 3.0 | 3.0 | 3.0 | 3.0 | 3.0 | 3.0 | 3.0 | 3.0 |
| | Stearic acid | - | - | - | - | - | - | - | 2.0 | 2.0 |
| | Vulcanization accelerator DPG *12 | 1.40 | 0.80 | 0.80 | 0.80 | 0.80 | 0.80 | 0.80 | 0.20 | 0.20 |
| Second kneading process | Vulcanization accelerator DM *18 | 2.00 | 2.00 | 2.00 | 2.00 | 2.00 | 2.00 | 2.00 | 2.00 | 2.00 |
| | Vulcanization accelerator NS *19 | 0.70 | 0.70 | 0.70 | 0.70 | 0.70 | 0.70 | 0.70 | 0.70 | 0.70 |
| | Vulcanization accelerator CZ *20 | - | - | - | - | - | - | - | - | - |
| | Sulfur | 1.5 | 1.5 | 1.5 | 1.5 | 1.5 | 1.5 | 1.5 | 1.5 | 1.5 |

(continued)

| | | | Comparative Example 10 | Comparative Example 11 | Example 1 | Example 2 | Example 3 | Example 4 | Comparative Example 12 | Example 5 | Comparative Example 13 |
|---|---|---|---|---|---|---|---|---|---|---|---|
| Physical properties | Processability | Pre-vulcanization viscosity | 111 | 96 | 98 | 96 | 98 | 96 | 95 | 102 | 91 |
| | Tensile properties | Tb (breaking resistance) | 105 | 101 | 110 | 108 | 111 | 109 | 103 | 102 | 98 |
| | Viscoelasticity | Tan δ (low loss property) at 60°C | 89 | 110 | 116 | 114 | 115 | 112 | 110 | 111 | 104 |
| | Wear resistance | Lambourn abrasion amount | 102 | 104 | 107 | 106 | 107 | 105 | 104 | 105 | 100 |

Index

[Table 3]

| Formulation | First kneading process | | Parts by mass | Comparative Example 14 | Comparative Example 15 | Example 6 | Example 7 | Example 8 | Example 9 | Comparative Example 16 |
|---|---|---|---|---|---|---|---|---|---|---|
| | | SBR *1 | | 80 | 80 | 80 | 80 | 80 | 80 | 80 |
| | | BR *2 | | 20 | 20 | 20 | 20 | 20 | 20 | 20 |
| | | Aromatic oil *3 | | 5 | 5 | 5 | 5 | 5 | 5 | 5 |
| | | Carbon black *4 | | 5 | 5 | 5 | 5 | 5 | 5 | 5 |
| | | Silica *5 | | 60 | 60 | 60 | 60 | 60 | 60 | 60 |
| | | Silane coupling agent *6 | | 5 | 5 | 5 | 5 | 5 | 5 | 5 |
| | | Glycerin fatty acid ester A *7 | | 2 | 2 | - | - | - | - | - |
| | | Glycerin fatty acid ester B *8 | | - | - | - | - | - | - | 2 |
| | | Glycerin fatty acid ester C *9 | | - | - | 2 | 2 | - | 2 | - |
| | | Glycerin fatty acid ester D *10 | | - | - | - | - | 2 | - | - |
| | | Stearic acid | | - | - | - | - | - | - | - |
| | | Age resistor 6C *11 | | 1.5 | 1.5 | 1.5 | 1.5 | 1.5 | 1.5 | 1.5 |
| | | Vulcanization accelerator DPG *12 | | - | - | - | - | - | - | - |
| | | Thiourea *13 | | - | 0.6 | 0.6 | - | 0.6 | - | - |
| | | Diethylthiourea *14 | | - | - | - | 1.0 | - | - | 1.0 |
| | | Thiadiazole *15 | | - | - | - | - | - | 0.1 | - |

EP 3 266 817 B1

| | | | | Comparative Example 14 | Comparative Example 15 | Example 6 | Example 7 | Example 8 | Example 9 | Comparative Example 16 |
|---|---|---|---|---|---|---|---|---|---|---|
| | Second kneading process | Zinc oxide | | 3.0 | 3.0 | 3.0 | 3.0 | 3.0 | 3.0 | 3.0 |
| | | Stearic acid | | 2.0 | 2.0 | 2.0 | 2.0 | 2.0 | 2.0 | 2.0 |
| | | Vulcanization accelerator DPG *12 | | 1.00 | 0.30 | 0.30 | 0.30 | 0.30 | 0.30 | 1.00 |
| | | Vulcanization accelerator DM *18 | | 1.20 | 1.20 | 1.00 | 1.00 | 1.00 | 1.00 | 1.20 |
| | | Vulcanization accelerator NS *19 | | - | - | - | - | - | - | - |
| | | Vulcanization accelerator CZ *20 | | 1.50 | 1.50 | 1.50 | 1.50 | 1.50 | 1.50 | 1.50 |
| | | Sulfur | | 2.0 | 2.0 | 2.0 | 2.0 | 2.0 | 2.0 | 2.0 |
| Physical properties | Processability | Pre-vulcanization viscosity | Index | 100 | 93 | 96 | 95 | 94 | 95 | 94 |
| | Tensile properties | Tb (breaking resistance) | | 100 | 105 | 110 | 112 | 107 | 106 | 102 |
| | Viscoelasticity | Tan $\delta$ (low loss property) at 60°C | | 100 | 103 | 105 | 105 | 104 | 104 | 102 |
| | Wear resistance | Lambourn abrasion amount | | 100 | 102 | 103 | 104 | 103 | 102 | 101 |

[Table 4]

| Formulation | | | | Comparative Example 17 | Comparative Example 18 | Comparative Example 19 | Example 10 |
|---|---|---|---|---|---|---|---|
| | First kneading process | SBR *1 | | 40 | 40 | 40 | 40 |
| | | BR *2 | | 40 | 40 | 40 | 40 |
| | | Natural rubber *21 | | 20 | 20 | 20 | 20 |
| | | Aromatic oil *3 | | 5 | 5 | 5 | 5 |
| | | Carbon black *4 | | 10 | 10 | 10 | 10 |
| | | Silica *5 | | 75 | 75 | 75 | 75 |
| | | Silane coupling agent *6 | | 7 | 7 | 7 | 7 |
| | | Glycerin fatty acid ester A *7 | | - | - | - | - |
| | | Glycerin fatty acid ester B *8 | | - | - | - | - |
| | | Glycerin fatty acid ester C *9 | | - | - | 2 | 2 |
| | | Glycerin fatty acid ester D *10 | | - | - | - | - |
| | | Stearic acid | Parts by mass | - | - | - | - |
| | | Age resistor 6C *11 | | 2.0 | 2.0 | 2.0 | 2.0 |
| | | Vulcanization accelerator DPG *12 | | - | - | - | - |
| | | Thiourea *13 | | - | - | - | - |
| | | Diethylthiourea *14 | | - | 1.0 | - | 1.0 |
| | | Thiadiazole *15 | | - | - | - | - |

(continued)

| | | | | Comparative Example 17 | Comparative Example 18 | Comparative Example 19 | Example 10 |
|---|---|---|---|---|---|---|---|
| Second kneading process | | Zinc oxide | | 2.5 | 2.5 | 2.5 | 2.5 |
| | | Stearic acid | | 2.0 | 2.0 | 2.0 | 2.0 |
| | | Vulcanization accelerator DPG *12 | | 0.6 | - | 0.6 | - |
| | | Vulcanization accelerator DM *18 | | 1.00 | 1.00 | 1.00 | 1.00 |
| | | Vulcanization accelerator NS *19 | | 0.50 | 0.50 | 0.50 | 0.50 |
| | | Vulcanization accelerator CZ *20 | | - | - | - | - |
| | | Sulfur | | 1.5 | 1.5 | 1.5 | 1.5 |

(continued)

| | | | | Comparative Example 17 | Comparative Example 18 | Comparative Example 19 | Example 10 |
|---|---|---|---|---|---|---|---|
| Physical properties | Processability | Pre-vulcanization viscosity | Index | 100 | 85 | 110 | 98 |
| | Tensile properties | Tb (breaking resistance) | | 100 | 98 | 105 | 108 |
| | Viscoelasticity | Tan δ (low loss property) at 60°C | | 100 | 109 | 95 | 111 |
| | Wear resistance | Lambourn abrasion amount | | 100 | 103 | 101 | 105 |

*1 SBR: styrene-butadiene copolymer rubber, solution polymerization SBR, trade name "Tafden 2000", made by Asahi Kasei Corporation *2 BR: polybutadiene rubber, solution polymerization BR, trade name "JSR BR01", made by JSR Corporation *3 Aromatic oil: trade name "Aromax #3", made by Fuji Kosan Co., Ltd.

*4 Carbon black: trade name "Diablack N234", ISAF-HS, made by Mitsubishi Chemical *5 Silica: trade name "Nipsil AQ", made by Tosoh Silica Corporation *6 Silane coupling agent: trade name "Si69", made by Degussa AG *7 Glycerin fatty acid ester A: the glycerin fatty acid ester synthesized according to the method of Production Example 4 and used in Example 4 of WO 2014/098155 A1 (PTL1), glycerin fatty acid monoester content = 64 mass%, glycerin fatty acid diester content = 34 mass%, glycerin fatty acid triester content = 1 mass%, glycerin content = 1 mass%, and the constituent fatty acids contain 99 mass% of palmitic acid and 1 mass% of other fatty acids *8 Glycerin fatty acid ester B: prepared via molecular distillation of the aforementioned glycerin fatty acid ester A, glycerin fatty acid monoester content = 97 mass%, and the constituent fatty acids contain 99 mass% of palmitic acid and 1 mass% of other fatty acids *9 Glycerin fatty acid ester C: prepared by synthesizing a glycerin fatty acid ester according to the method of Production Example 1 of WO 2014/098155 A1 (PTL1) except that palm derived hydrogenated fatty acids with the same molar amount are used as fatty acids instead of octanoic acids, and further performing molecular distillation, glycerin fatty acid monoester content = 97 mass%, and the constituent fatty acids contain 54 mass% of stearic acid, 42 mass% of palmitic acid, and 4 mass% of other fatty acids

*10 Glycerin fatty acid ester D: a mixture of the glycerin fatty acid ester B and the glycerin fatty acid ester C at a mass ratio of 1:1, glycerin fatty acid monoester content = 97 mass%, and the constituent fatty acids contain 71 mass% of palmitic acid, 27 mass% of stearic acid, and 2 mass% of other fatty acids

*11 Age resistor 6C: trade name "Nocrac 6C", made by Ouchi Shinko Chemical Industrial Co., Ltd., N-(1,3-dimethylbutyl)-N'-phenyl-p-phenylenediamine

*12 Vulcanization accelerator DPG: trade name "Nocceler D", made by Ouchi Shinko Chemical Industrial Co., Ltd., 1,3-diphenylguanidine

*13 Thiourea: thiourea, made by Sakai Chemical Industry Co., Ltd.

*14 Diethylthiourea: trade name "Rhenogran ETU-80", made by Rhein Chemie, N,N'-diethylthiourea

*15 Thiadiazole: trade name "Bismuthiol", made by Tokyo Chemical Industry Co., Ltd., 2,5-dimercapto-1,3,4-thiadiazole

*16 Vulcanization accelerator M: trade name "Nocceler M-P", made by Ouchi Shinko Chemical Industrial Co., Ltd., 2-mercaptobenzothiazole

*17 Vulcanization accelerator TBzTD: trade name "Sanceler TBZTD", made by Sanshin Chemical Industrial Co., Ltd., tetrabenzylthiuram disulfide

*18 Vulcanization accelerator DM: trade name "Nocceler DM", made by Ouchi Shinko Chemical Industrial Co., Ltd., di-2-benzothiazolyl disulfide

*19 Vulcanization accelerator NS: trade name "Nocceler NS-F", made by Ouchi Shinko Chemical Industrial Co., Ltd., N-tert-butyl-2-benzothiazolylsulfenamide *20 Vulcanization accelerator CZ: trade name "Nocceler CZ-G", made by Ouchi Shinko Chemical Industrial Co., Ltd., N-cyclohexyl-2-benzothiazolylsulfenamide *21 Natural rubber: RSS#3

EP 3 266 817 B1

From the results of Comparative example 1, Comparative Examples 3 and 4 in Table 1, and the results of Comparative Example 17 and Comparative Example 18 in Table 4, it is understood that if the activator (D) is compounded without compounding the glycerin fatty acid ester (E), the pre-vulcanization viscosity of the rubber composition is greatly increased. On the other hand, from the results of Comparative Example 4 in Table 1 and Example 1 in Table 2, the results of Comparative Example 3 in Table 1 and Examples 3 and 4 in Table 2, and the results of Comparative Example 18 and Example 10 in Table 4, it is understood that the rubber composition according to this disclosure suppresses increase of the pre-vulcanization viscosity, and thus is excellent in processability, and excellent in each one of breaking resistance, low loss property and wear resistance.

From the results of Comparative Example 12, Examples 3 and 4 in Table 2, and Comparative Example 15, Examples 6 and 8 in Table 3, it is understood that the combination of the chemical as disclosed in WO 2014/098155 A1 (PTL1) and the activator (D) greatly increases the pre-vulcanization viscosity of the rubber composition, while on the other hand, the combination of the glycerin fatty acid ester (E) as defined in this disclosure and the activator (D) suppresses increase of the pre-vulcanization viscosity of the rubber composition, and thus is capable of greatly improving the breaking resistance, the low loss property and the wear resistance.

INDUSTRIAL APPLICABILITY

The rubber composition for tire of this disclosure may be utilized in a tire. Moreover, the tire of this disclosure may be used as tires for various vehicles.

**Claims**

1. A rubber composition for tire obtainable by a method for producing a rubber composition comprising:

   (a) preparing a preliminary composition by preparing a first mixture containing all of or a part of a diene based rubber (A), a silica (B), a silane coupling agent (C) and at least one activator (D) selected from guanidines, cysteines, thioureas, ammonium thiocyanates, zinc dialkyl dithiophosphates or thiadiazoles, and containing a glycerin fatty acid ester (E), and kneading the first mixture; and
   (b) preparing the rubber composition by adding a vulcanizing agent (F) into the preliminary composition to prepare a second mixture, and kneading the second mixture, wherein:

   the glycerin fatty acid ester (E) is an ester of a glycerin and two or more fatty acids, a fatty acid component which is the most among the two or more fatty acids constituting the glycerin fatty acid ester being 10 to 90 mass% of all fatty acids;
   among the two or more fatty acids constituting the glycerin fatty acid ester (E), one among the most fatty acid component and a second most fatty acid component is a fatty acid with 16 carbon atoms, and the other is a fatty acid with 18 carbon atoms; and
   a compounding amount of the glycerin fatty acid ester (E) is 0.5 to 20 parts by mass per 100 parts by mass of the silica (B).

2. The rubber composition for tire according to claim 1, wherein:
   the fatty acid component which is the most among the two or more fatty acids is 15 to 80 mass% of all the fatty acids.

3. The rubber composition for tire according to claim 1 or 2, wherein:
   the glycerin fatty acid ester (E) contains 50 to 100 mass% of a glycerin fatty acid monoester.

4. The rubber composition for tire according to claim 3, wherein:
   the glycerin fatty acid ester (E) contains 60 to 99 mass% of a glycerin fatty acid monoester.

5. The rubber composition for tire according to claim 4, wherein:
   the glycerin fatty acid ester (E) contains 85 to 98 mass% of a glycerin fatty acid monoester.

6. The rubber composition for tire according to any one of claims 1 to 5, wherein:
   a mass ratio of the fatty acid with 16 carbon atoms and the fatty acid with 18 carbon atoms is 90/10 to 10/90.

7. The rubber composition for tire according to any one of claims 1 to 6, wherein:
   the activator (D) is at least one selected from thiourea, diethylthiourea or thiadiazoles.

8. A tire using the rubber composition for tire according to any one of claims 1 to 7.


**Patentansprüche**

1. Kautschukzusammensetzung für einen Reifen, zu erhalten durch ein Verfahren zum Herstellen einer Kautschukzusammensetzung, das Folgendes umfasst:

   (a) Zubereiten einer vorläufigen Zusammensetzung durch Zubereiten eines ersten Gemischs, das alles oder einen Teil von einem Kautschuk auf Dien-Grundlage (A), einem Siliziumdioxid (B), einem Silan-Haftvermittler (C) und mindestens einem Aktivator (D), ausgewählt aus Guanidinen, Cysteinen, Thioharnstoffen, Ammoniumthiocyanaten, Zinkdialkyldithiophosphaten oder -thiadiazolen, enthält und einen Glyzerinfettsäureester (E) enthält, und durch Kneten des ersten Gemischs, und
   (b) Zubereiten der Kautschukzusammensetzung durch Zugeben eines Vulkanisationsmittels (F) in die vorläufige Zusammensetzung, um ein zweites Gemisch zuzubereiten, und Kneten des zweiten Gemischs, wobei:

      der Glyzerinfettsäureester (E) ein Ester aus einem Glyzerin und zwei oder mehr Fettsäuren ist, wobei ein Fettsäurebestandteil, der unter den zwei oder mehr Fettsäuren, aus denen der Glyzerinfettsäureester besteht, der bedeutendste ist, 10 bis 90 Masse-% aller Fettsäuren ausmacht,
      unter den zwei oder mehr Fettsäuren, aus denen der Glyzerinfettsäureester (E) besteht, einer unter dem bedeutendsten Fettsäurebestandteil und einem zweitbedeutendsten Fettsäurebestandteil eine Fettsäure mit 16 Kohlenstoffatomen ist, und der andere eine Fettsäure mit 18 Kohlenstoffatomen ist, und
      eine Mischungsmenge des Glyzerinfettsäureesters (E) 0,5 bis 20 Masseanteile auf 100 Masseanteile des Siliziumdioxids (B) beträgt.

2. Kautschukzusammensetzung für einen Reifen nach Anspruch 1, wobei:
   der Fettsäurebestandteil, der unter den zwei oder mehr Fettsäuren der bedeutendste ist, 15 bis 80 Masse-% aller Fettsäuren ausmacht.

3. Kautschukzusammensetzung für einen Reifen nach Anspruch 1 oder 2, wobei:
   der Glyzerinfettsäureester (E) 50 bis 100 Masse-% eines Glyzerinfettsäuremonoesters enthält.

4. Kautschukzusammensetzung für einen Reifen nach Anspruch 3, wobei:
   der Glyzerinfettsäureester (E) 60 bis 99 Masse-% eines Glyzerinfettsäuremonoesters enthält.

5. Kautschukzusammensetzung für einen Reifen nach Anspruch 4, wobei:
   der Glyzerinfettsäureester (E) 85 bis 98 Masse-% eines Glyzerinfettsäuremonoesters enthält.

6. Kautschukzusammensetzung für einen Reifen nach einem der Ansprüche 1 bis 5, wobei:
   ein Masseverhältnis der Fettsäure mit 16 Kohlenstoffatomen und der Fettsäure mit 18 Kohlenstoffatomen 90/10 bis 10/90 beträgt.

7. Kautschukzusammensetzung für einen Reifen nach einem der Ansprüche 1 bis 6, wobei:
   der Aktivator (D) mindestens eines, ausgewählt aus Thioharnstoff, Diethylthioharnstoff oder Thiadiazolen, ist.

8. Reifen, der die Kautschukzusammensetzung für einen Reifen nach einem der Ansprüche 1 bis 7 verwendet.


**Revendications**

1. Composition de caoutchouc pour pneumatique pouvant être obtenue par un procédé de production d'une composition de caoutchouc, comprenant :

   (a) la préparation d'une composition préliminaire en préparant un premier mélange contenant tout ou une partie d'un caoutchouc à base de diène (A), une silice (B), un agent de couplage de silane (C) et au moins un activateur (D) sélectionné parmi des guanidines, des cystéines, des thiourées, des thiocyanates d'ammonium, des dialkyldithiophosphates de zinc ou des thiadiazoles, et contenant un ester d'acide gras de glycérine (E), et en malaxant le premier mélange ; et

(b) la préparation de la composition de caoutchouc en ajoutant un agent de vulcanisation (F) dans la composition préliminaire pour préparer un deuxième mélange, et en malaxant le deuxième mélange ; dans laquelle :

l'ester d'acide gras de glycérine (E) est un ester d'une glycérine et deux acides gras ou plus, un composant d'acide gras qui est le plus important parmi les deux acides gras ou plus constituant l'ester d'acide gras de glycérine représentant 10 à 90°% en masse de tous les acides gras ;

parmi les deux acides gras ou plus constituant l'ester d'acide gras de glycérine (E), l'un parmi le composant d'acide gras le plus important et un composant d'acide gras le deuxième plus important est un acide gras avec 16 atomes de carbone, et l'autre est un acide gras avec 18 atomes de carbone ; et

une quantité de mélangeage de l'ester d'acide gras de glycérine (E) est comprise entre 0,5 et 20 parties en masse pour 100 parties en masse de la silice (B).

2. Composition de caoutchouc pour pneumatique selon la revendication 1, dans laquelle :
le composant d'acide gras qui est le plus important parmi les deux acides gras ou plus représente 15 à 80 % en masse de tous les acides gras.

3. Composition de caoutchouc pour pneumatique selon la revendication 1 ou 2, dans laquelle :
l'ester d'acide gras de glycérine (E) contient 50 à 100 % en masse d'un monoester d'acide gras de glycérine.

4. Composition de caoutchouc pour pneumatique selon la revendication 3, dans laquelle :
l'ester d'acide gras de glycérine (E) contient 60 à 99 % en masse d'un monoester d'acide gras de glycérine.

5. Composition de caoutchouc pour pneumatique selon la revendication 4, dans laquelle :
l'ester d'acide gras de glycérine (E) contient 85 à 98 % en masse d'un monoester d'acide gras de glycérine.

6. Composition de caoutchouc pour pneumatique selon l'une quelconque des revendications 1 à 5, dans laquelle :
un rapport de masse entre l'acide gras avec 16 atomes de carbone et l'acide gras avec 18 atomes de carbone est compris entre 90/10 et 10/90.

7. Composition de caoutchouc pour pneumatique selon l'une quelconque des revendications 1 à 6, dans laquelle :
l'activateur (D) est au moins l'un sélectionné parmi la thiourée, la diéthylthiourée ou les thiadiazoles.

8. Pneumatique utilisant la composition de caoutchouc pour pneumatique selon l'une quelconque des revendications 1 à 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014098155 A1